# FASCICULE DE BREVET EUROPEEN

(11) **EP 3 416 769 B1**
(45) Date de publication et mention de la délivrance du brevet: **11.01.2023**
(21) Numéro de dépôt: 16813097.9
(22) Date de dépôt: 30.11.2016
(51) Int. Cl.: B22F 1/00, B22F 3/22

(54) **PROCÉDÉ DE FABRICATION D'UN BÉTA-ALLIAGE TITANE NIOBIUM ZIRCONIUM (TNZ) À TRÈS BAS MODULE D'ÉLASTICITÉ POUR APPLICATIONS BIOMÉDICALES ET SON MODE DE RÉALISATION PAR FABRICATION ADDITIVE**
VERFAHREN ZUR HERSTELLUNG EINER TITAN-NIOB-ZIRKONIUM (TNZ)-BETALEGIERUNG MIT SEHR NIEDRIGEM ELASTIZITÄTSKOEFFIZIENTEN FÜR BIOMEDIZINISCHE ANWENDUNGEN UND VERFAHREN ZUR HERSTELLUNG DAVON DURCH GENERATIVE FERTIGUNG
PROCESS FOR MANUFACTURING A TITANIUM NIOBIUM ZIRCONIUM (TNZ) BETA-ALLOY WITH A VERY LOW MODULUS OF ELASTICITY FOR BIOMEDICAL APPLICATIONS AND METHOD FOR PRODUCING SAME BY ADDITIVE MANUFACTURING

(30) Priorité: 08.02.2016 FR 1600205
(43) Date de publication de la demande: 26.12.2018
(73) Titulaire: Djemai, Abdelmadjid, 95170 Deuil La Barre (FR)
(72) Inventeur: FOUCHET, Jean-Jacques, 45700 Lombreuil (FR); DJEMAI, Abdelmadjid, 45700 Lombreuil (FR)
(74) Mandataire: IP Trust
(86) Numéro de dépôt international: PCT/FR2016/053156
(87) Numéro de publication internationale: WO 2017/137671

(56) Documents cités:
- EP-A1- 0 707 085
- US-A- 5 509 933
- ZHANG L C ET AL: "Manufacture by selective laser melting and mechanical behavior of a biomedical Ti24Nb4Zr8Sn alloy", SCRIPTA MATERIALIA, ELSEVIER, AMSTERDAM, NL, vol. 65, no. 1, 15 mars 2011 (2011-03-15), pages 21-24, XP028196382, ISSN: 1359-6462, DOI: 10.1016/J.SCRIPTAMAT.2011.03.024 [extrait le 2011-03-23]

## Description

### DOMAINE DE L'INVENTION

La présente invention se rapporte à un alliage de titane avec un faible module d'élasticité, une forte résistance à la compression, avec notamment pas d'éléments nocifs pour le corps humain, et plus particulièrement un alliage à base de bêta- titane avec un faible module de Young.

### ETAT DE LA TECHNIQUE ET SES INCONVENIENTS

Les prothèses et implants médicaux sont actuellement réalisés à partir d'alliages Cr-Co, d'acier inoxydable, de titane (grade 2) ou d'alliages de titane biphasés alpha + bêta (TA6V ELI).

Le titane et ses alliages sont majoritairement utilisés pour leurs propriétés mécaniques et leur biocompatibilité. Historiquement conçus pour l'aéronautique, ils ont été par la suite adaptés au domaine biomédical.

Cette adaptation pose cependant le problème de la cytotoxicité potentielle surélevée du vanadium et de l'aluminium contenue dans l'alliage Ti-6AI-4V. En effet, l'accumulation du vanadium dans l'organisme est associée à des risques d'irritation du système respiratoire et l'absorption de l'aluminium est également néfaste car risquant de provoquer des troubles neurologiques, y compris la maladie d'Alzheimer, comme rapporté dans l'étude « Titanium: A New Allergen » du professeur Laurence Evrard chef du département de Stomatologie et maxillo-faciale à l'hôpital Erasme de Bruxelles, Belgique, publié en 2011 dans la revue Intech.

En raison de la controverse concernant les effets toxiques potentiels des composés de vanadium et d'aluminium, les alliages sans vanadium ni aluminium comme le Ti-13Nb-13Zr (ASTM F1713), le Ti-6AI-7Nb et le Ti-5A1- 2.5Fe ont été récemment développés pour des applications biomédicales.

L'amélioration de la biocompatibilité chimique passe par une nouvelle formulation qui remplace les éléments potentiellement toxiques par d'autres éléments chimiquement biocompatibles. De même, une propriété mécanique telle que la résistance spécifique, recherchée en aéronautique, doit être associée en biomécanique à un abaissement du module d'élasticité.

La biocompatibilité mécanique consiste à adapter la raideur de l'implant à celle de l'os afin d'assurer un transfert de charge mécanique plus homogène favorable à l'ostéointégration. Le module d'élasticité des alliages de titane, bien que plus faible que celui de l'acier reste encore élevé (110 GPa) si on le compare à celui des tissus biologiques hôtes (10 à 30 GPa pour l'os).

Dès les années 1990, le problème de l'effet de la résorption de l'os au niveau de l'interface os/implant (« stress shielding » en anglais, avec comme acronyme « SS ») a été souvent soulevé. la résorption de l'os au niveau de l'interface os/implant est causée par la différence de module d'élasticité entre celui de l'os naturel avec un faible module d'élasticité (10 à 30GPa) et celui du matériau biocompatible avec un module d'élasticité élevé (110GPa pour le Ti-6Al-4V).

Par exemple, un implant métallique avec un module d'élasticité élevé porte plus la charge appliquée à la région autour de cet implant et l'os naturel dans la région ne porte aucune tension, du fait de la compression et de la flexion, l'épaisseur et le poids de l'os naturel se réduit progressivement, ce qui provoque de graves problèmes comme l'ostéoporose autour de l'implant ou des nécroses. Comme l'os naturel est affaibli, la densité du cortex du tissu osseux diminue et ainsi la force de liaison entre l'os naturel et l'implant artificiel diminue également, ce qui entraîne une diminution de la durée de vie de l'implant.

En conséquence, une demande est apparue pour un métal qui soit sans danger pour le corps humain et possède un module d'élasticité le plus bas possible pour se rapprocher de celui de l'os du corps humain.

Des alliages de type Ti-13Nb-13Zr (ASTM F1713), Ti-12Mo-6Zr-2Fe (ASTM F1813), Ti-15Mo (ASTM F2066), Ti-35Nb- 5TA-7ZR et Ti-16Nb-13Ta-4Mo ont été développés pour résoudre les problèmes mentionnés ci-dessus.

Cependant, les alliages de titane qui ont été mis au point jusqu'à maintenant, présentent un module d'élasticité d'environ 60 GPa à 80 GPa environ, ce qui est encore beaucoup plus élevé que le module d'élasticité des os naturels qui vont de l'ordre de 10 à 30 GPa.

L'état de la technique peut être défini par les brevets suivants :
- le brevet US 4 952 236 décrit un procédé de préparation d'alliage titane avec une résistance élevée, un faible module de Young, ductile, un alliage à base de titane biocompatible (composition typique Ti-11.5Mo-6Zr-2Fe), qui est caractérisé par un module d'élasticité ne dépassant pas 100 GPa. Cependant, les valeurs de module d'élasticité des alliages Ti-11.5Mo-6Zr-2Fe sont dans la gamme d'environ 62 à 88 GPa, sans possibilité de réduction du module d'élasticité,
- le brevet US 5 169 597 décrit un alliage de titane biocompatible avec un faible module de Young (composition typique Ti-13Zr-13Nb). Cet alliage peut être utilisé comme matériau pour des implants prothétiques médicaux en particulier là où un faible module d'élasticité est important. Encore une fois, les valeurs de module d'élasticité des alliages Ti-13Nb 13Zr- sont au mieux de l'ordre de 80GPa,
- le brevet US 6 752 882 décrit un alliage biocompatible binaire titane-niobium (Ti-Nb), qui présente un faible module de Young avec une haute résistance et contient une phase beta en tant que phase principale. L'alliage binaire Ti-Nb contient 10 à 30% en poids de Nb, de préférence 13 à 28% en poids de Nb, et le titane en balance, qui est approprié pour fabriquer un implant orthopédique ou un implant dentaire. Les valeurs de module d'élasticité des alliages binaires Ti-Nb sont dans la plage de 61 à 77 GPa,
- la demande de brevet US publication US2007 / 0163681 décrit des alliages de titane avec un module de Young bas (52 à 69GPa) et avec une haute résistance (limite d'élasticité 990 MPa après laminage à froid). L'alliage de titane contient du vanadium, de 10 à 20% en poids, de l'aluminium de 0,2 à 10% en poids, et le reste étant essentiellement du titane. L'alliage a une microstructure comprenant une phase martensitique. Toutefois, aucune ductilité à la traction n'est présentée. Après laminage à froid, cet alliage montre très peu de ductilité et contient des éléments potentiellement toxiques (Vanadium et aluminium).
- le brevet US 6 607 693 décrit un alliage de titane, caractérisé par un module de Young de 75 GPa et une forte élasticité à la traction de l'ordre de 700 MPa de limite ou plus. Cet alliage comprend un élément du groupe V (groupe du vanadium) en une quantité de 30 à 60% en poids et le reste du titane, et peut être utilisé dans une variété de domaines qui nécessitent un module de Young bas et une déformabilité élastique élevée. Cet alliage contient des éléments potentiellement toxiques (Vanadium).
- un alliage de titane ayant d'excellentes propriétés de formage (un pli de ductilité maximale de rayon / épaisseur 2) est décrit dans le brevet US 2 864 697. La composition typique de cet alliage est du Ti-15V-2.5Al (% en poids).Cependant, les excellentes propriétés de formage ne peuvent être obtenues à l'état de solution dans laquelle la résistance est très faible (limite élastique de 275 MPa). Si la limite d'élasticité est augmentée jusqu'à 700 à 800 MPa en utilisant un traitement de vieillissement, la ductilité et les propriétés de formage sont diminuées (rayon / épaisseur de 5 à 10), mais le module de Young est également augmenté.

Tous ces brevets décrivent des moyens et des méthodes de réalisation d'alliage de titane pour abaisser le module d'élasticité, mais ne permettant pas d'approcher au plus près du module d'élasticité de l'os et/ou ne donnent pas de solution pour éviter l'emploi de composés potentiellement toxiques.

Par ailleurs, plusieurs publications récentes traitent du sujet des alliages beta pour la réalisation d'implants médicaux, les publications les plus pertinentes sont :
« Manufacture by selective laser melting and mechanical behavior of a biomedical Ti-24Nb-4Zr-8Sn alloy» publié le 02 Avril 2015 dans la revue ScienceDirect.
« Microstruture and mechanical properties of novel beta titanium metallic composite by Selective Laser Melting» publié le 18 janvier 2014 dans la revue Acta Materialia.
« Microstructure, elastic deformation behavior and mechanical properties of biomedical β-type titanium alloy thin-tube used for stents" Publié le 11 fevrier 2015 dans la revue ScienceDirect.
« Topological design and additive manufacturing of porous metals for bone scaffolds and orthopaedic implants: A review » publié le 6 janvier 2016 dans la revue "Biomaterials" ScienceDirect.

Toutes ces publications s'accordent sur les avantages indéniables de la mise en œuvre d'une nouvelle génération de biomatériaux à faible module d'élasticité et les avantages indéniables de la fabrication additive dans leur mise en forme.

Cependant, dans ces exemples, le plus faible module d'élasticité rapporté dans la littérature jusqu'ici pour les alliages à base de Titane (Ti) développé pour des applications biomédicales est de 40 GPa pour l'alliage Ti-39Nb-6Zr.

Il est ainsi encore plus élevé que celui de l'os cortical (10 à 30 GPa) et en particulier très éloigné de celui de l'os spongieux avec un module de Young compris entre 0,01 GPa et 3 GPa.

Afin de réduire encore le module d'élasticité des alliages à base de Titane, des tentatives ont été effectuées pour réaliser des alliages poreux par ajout d'additifs solubles ou par réalisation de structures alvéolaires comme rapporté dans la publication « Topological design and additive manufacturing of porous metals for bone scaffolds and orthopaedic implants: A review ».

Les études ont montré que le module d'élasticité est une propriété qui ne varie pas facilement et que les matériaux poreux issus d'un alliage TA6V (le plus utilisé pour les implants orthopédiques) présentent toujours un module d'élasticité élevé proche de celui de l'alliage massif.

L'idée principale des alliages poreux est de réduire la rigidité et de fournir une meilleure fixation biologique à l'os en favorisant la croissance du tissu osseux dans les pores des implants, ce qui permet un meilleur transfert de stress/charges d'une manière homogène entre les os et l'implant.

À l'heure actuelle, le titane et ses alliages poreux sont devenus un aspect important des biomatériaux. Ils attirent un large intérêt des chercheurs en Biomatériaux du fait que les alliages à base Ti avec une porosité adaptée sont idéaux pour l'adhérence cellulaire, la viabilité, la croissance osseuse et l'oséointégration. Il y a eu de nombreuses études et recherches sur différents revêtements poreux et les matrices poreuses à des échelles macro, micro et nano, comme rapporté dans la publication « Osteoblast cell response to nanoscale SiO2/ZrO2 particulate-reinforced titanium composites and scaffolds by powder metallurgy » publié dans Journal of Materials Sciences.

Ces approches n'apportent cependant pas de solutions viables pour la résorption osseuse « stress shielding (SS) du fait que le module de Young du matériau solide est très haut (au mieux 40 GPa), le faire descendre à 2 GPa en jouant sur le taux de porosité, se résume à fragiliser la structure en tentant de donner de l'élasticité à l'alliage.

La principale raison de la mauvaise fixation des biomatériaux au tissu osseux reste le problème de l'inadéquation du module d'élasticité entre les biomatériaux et les os environnants (milieu implantaire). Cependant, les matériaux implantés doivent être solides et suffisamment durables pour résister aux charges et/ou chocs exercés et tenir le plus longtemps sans défaillance.

Un équilibre approprié entre la force et la rigidité est à trouver pour se rapprocher au mieux des caractéristiques mécaniques de l'os et résoudre le problème de résorption de l'os au niveau de l'interface os/implant (« stress shielding »).

Il existe donc une demande considérable pour un matériau qui ne soit pas nocif pour le corps humain, présentant un module d'élasticité proche de l'os et ayant une résistance forte à la fatigue.

### EXPOSE DE L'INVENTION

L'invention résout ce problème en proposant un procédé de mise en forme d'un alliage comprenant principalement du Ti en phase β ou proche β selon la revendication 1.

L'invention peut présenter l'une et/ou l'autre des caractéristiques suivantes :
- la granulométrie des particules micrométrique de Ti est comprise entre 5 et 50 microns,
- la granulométrie des particules nanométriques de l'élément additionnel est comprise entre 5 et 250 nm,
- la source d'énergie comprend une source d'énergie modulable de type laser (SLM) ou faisceau d'électrons (EBM) ou est dégagée lors d'une opération de frittage de poudres (SLS) ou par projection de poudres sur un faisceau laser (PFLAM) ou projection de liants (3D printing) ou fusion par induction (ISM) ou fusion par induction sous vide (VIM) ou refusion par arc sous vide (VAR) ou fusion par arc de plasma de fusion (ARC) ou par compression isostatique à chaud (HIP) ou moulage injection métal (MIM),
- le temps d'exposition d'une zone du mélange homogène est inférieur à 5 secondes et supérieur à 10 ms.

L'invention présente également un procédé de fabrication d'un objet d'une forme géométrique donnée selon la revendication 4.

Idéalement, la forme géométrique à réaliser est constituée au moins en partie d'un réseau de cellules unitaires interconnectées définissant une structure poreuse.

L'invention concerne également un matériau composite selon la revendication 6.

Idéalement, le matériau composite obtenu :
- définit un réseau de formations microscopiques contenant majoritairement du titane entourées de plages comprenant l'élément additif et/ou
- est constitué d'un réseau de cellules unitaires interconnectées définissant une structure poreuse
- présente une porosité comprise entre 60% et 70%, une taille des pores comprise entre 250 µm et 700 µm et une distribution des pores comprise entre 800 µm et 1800 µm avec une interconnectivité totale
présente un module d'élasticité compris entre 0,3 GPa et 1,4 GPa et une résistance à la compression supérieure à 100 MPa.

La description présente aussi un objet biocompatible selon la revendication 7.

### DESCRIPTION DES FIGURES

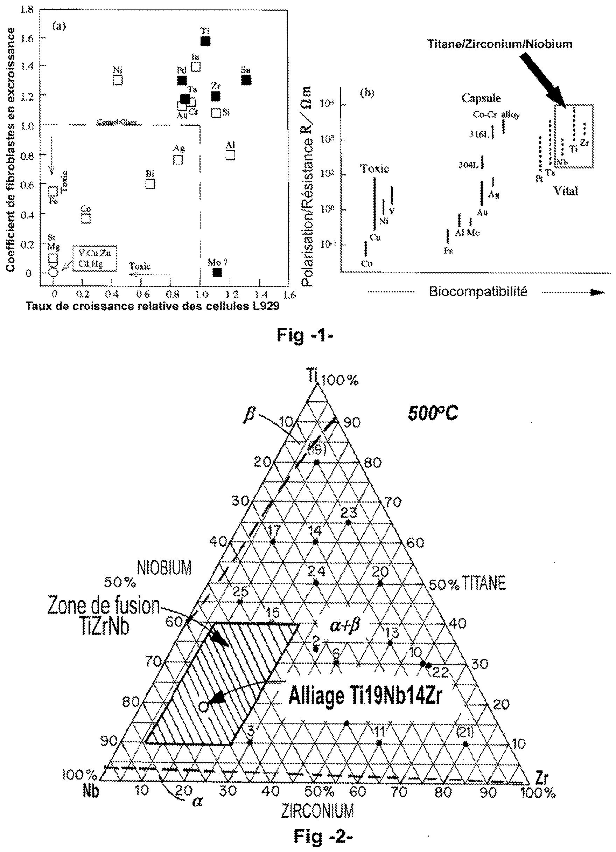

Figure1 : la sécurité biologique des métaux (a) la cytotoxicité des métaux purs (b) relation entre la résistance de polarisation et la biocompatibilité des métaux purs.
Figure2 : diagramme des phases à 500°C titane, zircone et niobium (TZN) publié par E. Levin, H. McMurdie, Phase Diagrams for ceramists, 1975 dans la revue American Ceramic Society P. 169

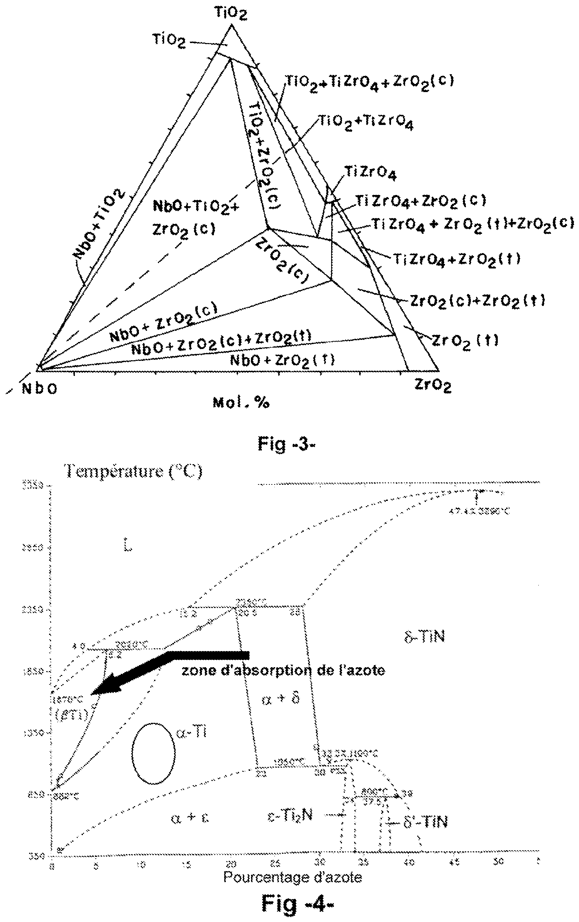

Figure3 : diagramme des phases à 1500°C des oxydes de titane, zircone et niobium (TZN)
Figure 4 : diagramme d'équilibre Ti-N d'après (A.L. Thomann 1995)

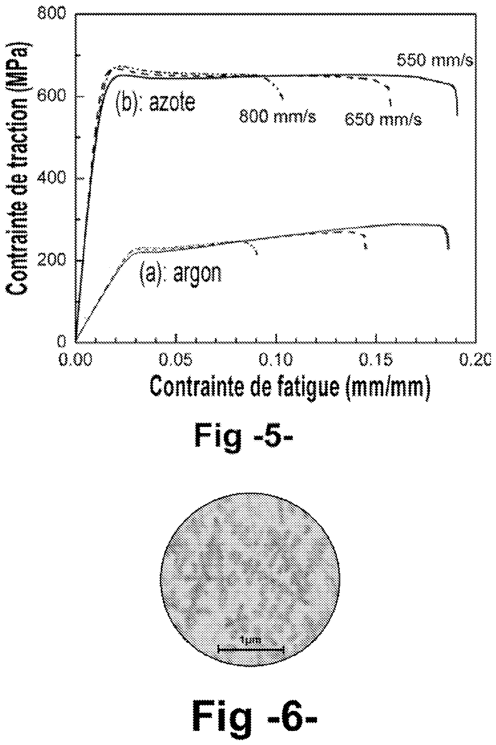

Figure 5 : diagramme contrainte de traction/ contrainte de fatigue sous argon et sous azote
Figure 6 : Image MEB de répartition spatiale des composants de l'alliage Ti19Nb14Zr

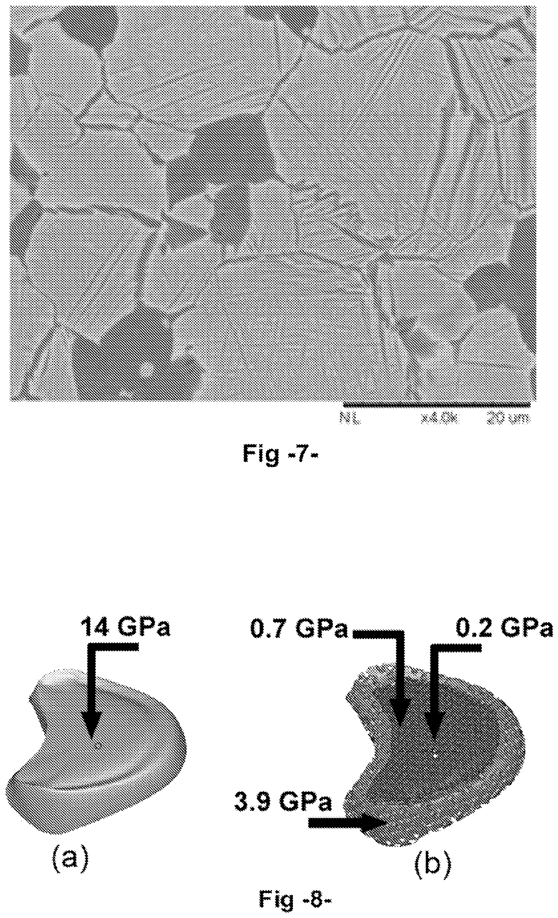

Figure 7 : microstructure de l'alliage Ti19Nb14Zr
Figure 8 : Exemple de réalisation d'un disque intervertébral (DIV) avec l'alliage Ti19Nb14Zr

### DESCRIPTION DETAILLEE

La présente invention a pour but de créer un matériau qui ne soit pas nocif pour le corps humain, présentant un module d'élasticité proche de l'os et ayant une résistance forte à la fatigue.

A cet effet, l'invention concerne généralement un procédé de mise en forme d'un alliage comprenant principalement du Ti en phase β ou proche β, comprenant les étapes de :
- préparation d'un mélange homogène de poudre de particules comprenant des particules micrométriques de Ti pur et des particules nanométriques d'au moins un élément additionnel ou composé favorisant la phase béta du Ti lors de son refroidissement à partir de sa température de transition de phase α/β
- exposition dudit mélange de poudre de particules à une source d'énergie focalisée qui vient chauffer sélectivement au moins une partie d'un lit dudit mélange homogène de poudre à une température comprise entre 850 et 1850°C
- refroidissement de la partie ayant subi cette exposition avec conservation de la phase beta du Ti.

Afin que le ou les éléments additionnels puisse favoriser la conservation de la phase beta du titane lors de son refroidissement, ils sont prévus sous la forme de nanoparticules d'une granulométrie comprise entre 5 et 700 nm, de préférence entre 5 et 250 nm et les particules de Ti, une granulométrie comprise entre 5 et 200 microns, de préférence entre 5 et 50 microns.

Par ailleurs, de manière préférée, la source d'énergie focalisée est un spot laser programmé pour agir sur une zone de fusion durant un temps d'exposition inférieur à 5 secondes et de préférence supérieur à 10 ms, afin que cette zone de fusion atteigne ou dépasse une température de chauffage de 850°C où intervient la transition α/β du titane, et de préférence atteigne ou dépasse la température de fusion de fusion du titane 1650°C en étant limitée à 1850°C.

D'autres sources d'énergie peuvent bien entendu convenir tel que le faisceau d'électrons (EBM) ou est dégagée lors d'une opération de frittage de poudres (SLS) ou par projection de poudres sur un faisceau laser (PFLAM) ou projection de liants (3D printing) ou fusion par induction (ISM) ou fusion par induction sous vide (VIM) ou refusion par arc sous vide (VAR) ou fusion par arc de plasma de fusion (ARC) ou par compression isostatique à chaud (HIP) ou moulage injection métal (MIM).

Pour une application dans le domaine médical, la poudre métallique préférée est constituée de Zr dans une teneur de 14 % en poids de l'alliage et Nb dans une teneur de 19 % en poids, le reste étant du Ti, l'alliage formé étant Ti-19Nb-14Zr, le Ti présentant une granulométrique comprise entre 5 et 50 microns, et le Nb et Zr, une granulométrie comprise entre 5 et 250 nm.

Il est important d'obtenir un mélange homogène de poudres, c'est à dire dans lequel une majorité des microparticules de métal sont chacune entourée de nanoparticules d'élément additif, sans agrégats de ces nanoparticules. A cet effet, on mélange ces poudres dans les proportions indiquées au sein d'un mélangeur ou blendeur, et en les soumettant à une agitation durant x min avec une fréquence d'agitation de ... Le mixage des poudres est réalisé sous gaz inerte de type argon ou sous vide jusqu'à obtention d'un mélange homogène avec formation de pellicules dragéifiant les particules de titane avec les nano poudres d'éléments additifs, sans aucune ségrégation ni agglomération des nano poudres et présentant une coulabilité et compaction appropriés aux techniques de fusion sur lit de poudre.

Etant donné que le matériau selon l'invention est généré par un procédé de fabrication additive, il est avantageux de le mettre en forme suivant une forme géométrique donnée, dans le même temps qu'il est crée.

A cet effet, en fonction de la forme géométrique à réaliser, on prépare des tranches virtuelles de l'objet à réaliser d'épaisseur donnée suivant un axe de construction de l'objet. Il est possible que cette forme inclue des zones poreuses permettant par exemple une croissance osseuse, ou permettant que l'objet final présente des propriétés mécaniques désirées.

On utilise un mélange homogène de poudre de titane micrométrique et de poudre nanométrique d'un élément additif favorisant la phase béta du titane lors de son refroidissement à partir de la température de transition α/β (par exemple Zr, Nb) que l'on dépose sur un substrat sous la forme d'une couche du mélange de poudre d'une épaisseur correspondant à celle de la tranche de la forme géométrique à réaliser ou d'une épaisseur comprise entre 5 et 50 µm.

On expose ensuite ledit mélange de poudre de ladite première couche au spot laser qui vient fusionner sélectivement une partie du lit dudit mélange de poudre aux emplacements correspondant à la tranche virtuelle à réaliser. Pour former une structure poreuse, le spot est déplacé pour définir un réseau de cellules unitaires interconnectées définissant une structure poreuse tel qu'il sera explicité dans la suite.

On obtient ainsi une première tranche de la forme géométrique à réaliser, au sein de la première couche de mélange de poudre.

On répète une opération de dépôt d'une n-ième couche de mélange de poudre sur la couche précédente incluant la tranche de l'objet réalisée à l'étape précédente, et d'exposition de la n-ième couche à la source d'énergie focalisée pour obtenir une n-ième tranche de la forme géométrique à réaliser jusqu'à l'obtention de la forme géométrique à réaliser.

Ce procédé selon l'invention permet l'obtention d'un objet biocompatible, tel qu'un implant ou une prothèse lorsque des poudres métalliques biocompatibles sont utilisées.

Il permet d'obtenir des objets de l'industrie automobile ou aéronautique de grandes précisions et aux propriétés mécaniques intéressantes.

On détaille dans ce qui suit certains aspects du procédé et du matériau selon l'invention en référence aux figures :

### Matériau biocompatible préféré

La présente invention se rapporte à la réalisation d'un alliage de titane avec un faible module d'élasticité, une forte résistance à la compression, avec notamment pas d'éléments nocifs pour le corps humain, et plus particulièrement un alliage à base de bêta- titane avec un faible module de Young, notamment le titane (Ti), le niobium (Nb) et le zirconium (Zr) dans une formulation avantageusement sélectionnée (Ti19Nb14Zr), les éléments composants cet alliage sont les matériaux les moins toxiques et qui se rapprochent le plus du vivant comme indiqué dans la figure -1- (b) , et qui présentent un taux de survie et d'excroissance de fibroblastes le plus élevé comme indique dans la figure -1- (b).

Selon l'invention, l'alliage Ti19Nb14Zr tel que préparé et fusionné présente un module d'élasticité égal à 14 GPa. Ce faible module d'élasticité on le comprend bien à la vue du diagramme des phases du titane, zircone et niobium (TZN) de la figure -2- , où on identifie clairement la zone de fusion TiZrNb dans sa phase B-métastable, instables mécaniquement, de manière à d'obtenir des microstructures biphasées alpha"+/bêta qui présentent des propriétés super-élastiques , en effet l'alliage Ti19Nb14Zr est proche β et qui sous contrainte de la phase alpha proche responsable de l'effet super-élastique présente le plus bas score d'élasticité pour un alliage à base titane.

Toutes les combinaisons des inters réactions entre les matériaux Ti/Zr/Nb en présence d'oxygène comme indique dans la figure -3- qui représente le diagramme des phases à 1500°C des oxydes de titane, zircone et niobium (TZN).

Selon l'invention, la pièce issue de la chambre de fusion subit un traitement thermique sous azote selon lequel elle est introduite dans un four thermique métallique susceptible de monter jusqu'à 3000°C où de l'azote (N) est ajouté sous sa forme gazeuse dans des proportions comprise entre 5 et 10% sous une pression avantageusement comprise entre 10 et 12 bar et dans une plage de température comprise entre 850° et 1850°C, comme indiqué dans la figure -4- où la zone d'absorption de l'azote est bien identifiée, afin d'améliorer la contrainte de traction de 200 MPa à plus de 600 MPa en maintenant la même élasticité, comme indiqué dans la figure -5- où on constate que la contrainte à l'étirement est triplée. Ce traitement thermique a pour but de donner une dureté supplémentaire en maintenant la même élasticité et en diminuant les tensions résiduelles entre les couches réalisées successivement de la pièce. Idéalement, le traitement thermique sous azote est réalisé à 1100°C durant 45 minutes.

La figure -6- montre une image MEB de l'alliage Ti19Nb14Zr avec une répartition spatiale des composants Ti/Zr/Nb.

Dans l'image MEB de la Figure -7- on voit bien la formation cristalline du titane renforcée par le Zirconium dans la microstructure de l'alliage Ti19Nb14Zr, entouré de grande plage de Niobium ductile, ce qui explique le très bas niveau du module de Young.

La Figure -8- illustre par l'exemple, la réalisation d'un disque intervertébral (DIV) à base de l'alliage Ti19Nb14Zr, (a) la réalisation de l'implant sans structure poreux avec un module de Young de 14 GPa ce qui correspond à l'alliage Ti19Nb14Zr dans sa forme solide.

(b) la réalisation de l'implant avec une délimitation de plusieurs zones, et dans chaque zone une architecture poreuse est appliquée ce qui se rapproche le plus de l'architecture des os qui présentent des zone avec des modules d'élasticité différents.

### Réalisation d'une cage intersomatique

L'invention concerne également la réalisation d'une cage intersomatique de forme anatomique comme illustré en fig-8 avec un matériau biocompatible présentant un module d'Young faible et ainsi une certaine élasticité, et par un procédé de fabrication additive, tels que décrits ci-dessus.

Cette cage est composée :
1- d'une paroi externe à structures poreuses semi-rigide (2-1), destinée à supporter la compression des corps osseux, dans le cas de l'exemple de la présente invention deux vertèbres adjacentes à un disque intervertébral
2- d'un espace interne à structure en treillis plus souple exposé par une première face de fusion (2-2) destinée à venir en contact avec l'un des corps osseux (4-1), une seconde face de fusion (2-3), opposée à la précédente destinée à venir en contact avec l'autre corps osseux, lesdites faces de fusion (2-2) (2-3) sont disposées parallèlement sans contact de leurs faces internes,
3- d'un organe écarteur (2-4) en forme de coin à fendre rapporté, venant s'insérer dans un conduit réalisé dans la paroi externe, entre les deux faces de fusion afin de les repousser contre les corps osseux (4-1)(4-2) après son introduction. Le conduit sera agencé pour assurer un guidage afin d'assurer le passage de l'organe écarteur (2-4) au milieu des faces de fusions (2-2) (2-3), et l'organe écarteur configuré pour écarter l'une de l'autre les deux faces de fusion. Elles pourront présenter un profil biseauté leur permettant d'être écartées l'une de l'autre lorsque l'organe écarteur sous forme de tige est enfoncé.

Pour une meilleure compréhension de la présente invention, une coupe longitudinale de la cage intersomatique comme indiqué en fig-3, illustre bien le système d'expansion (3-6) des faces de fusion (2-2) (2-3). L'organe écarteur (3-5) est introduit dans l'espace (3-3) situé en interne des faces de fusions (2-2) (2-3), à son passage et avec sa forme en coin de fente, ledit organe écarteur (3-5) repousse les faces de fusions (2-2) (2-3) contre la face supérieure de la vertèbre inférieure (4-2) et contre la face inférieure de la vertèbre supérieure (4-1).

Une coupe longitudinale de la cage intersomatique installée entre deux vertèbres comme indiqué en fig-4, illustre bien le système autobloquant, caractérisé en ce que les extrémités des intersections du treillis poreux des surfaces externes (4-3) et (4-5) des deux faces de fusion (2-2) (2-3) sont en forme de pics pyramidaux (4-6). Les dits pic pyramidaux (4-6) viennent s'enfoncer dans la face supérieure de la vertèbre inférieure (4-2) et dans la face inférieure de la vertèbre supérieure (4-1) sous la contrainte de poussée de l'organe écarteur (3-5), ce mode de blocage présente l'avantage des grandes surfaces d'accroche (4-3) (4-5) entre la cage intersomatique (1-4) et les vertèbres (4-1) (4-2). Lesdites surfaces d'accroche (4-3) (4-5) sont tapissés de pics qui sont introduits dans les vertèbres ce qui favorise avantageusement l'oséointégration et l'ostéosynthèse par la colonisation rapide des pores (3-2) de la cage intersomatique.

Le matériau utilisé pour la réalisation de ladite cage intersomatique est un matériau du type décrit ci-dessus dans la présente invention, présentant une élasticité et une résistance à la compression suffisante par exemple l'alliage Ti19Nb14Zr.

Il est tout à fait possible de concevoir cette cage avec un autre type de matériau toujours biocompatible de métal pur ou d'alliages métalliques de type Chrome cobalt, tantale, niobium, des composés métallo céramique ou organo-métal ou organo céramique ou une combinaison organo-céramique métal.

Des exemples d' alliages de matériaux sont les suivants :
- un alliage Titane Aluminium vanadium Ti6Al4V de grade 23, avec un taux d'oxygène < 0.2 %,
- Une combinaison d'un alliage de titane mélangé avantageusement avec un matériau à base de zircone, selon l'invention.
- Une combinaison d'un alliage de titane mélangé avantageusement avec un alliage à base de nickel.

Et dans un mode de réalisation préférentiel, un matériau biocompatible contenant un matériau composite binaire zircone/titane avec des concentrations de poudre de zircone comprise entre 0,5 % et 15 %.

Pour abaisser encore leur module d'élasticité, sans trop nuire à leurs propriétés mécaniques, l'un ou l'autre de ces matériaux peuvent en outre être présents dans une forme solide et/ou poreuse :
- dans une forme solide ou pleine (dans le sens non poreuse) ou faiblement poreuse (structure en treillis semi-rigide) pour la paroi externe 2-1 et
- dans une forme plus poreuse (structure en treillis souple) pour la constitution des faces de fusion 2-2 et 2-3 (avec par exemple une différence de porosité de l'ordre de 40% afin d'autoriser leur déformation vers la structure osseuse avec l'organe écarteur.

Par exemple, la structure en treillis souple des faces de fusion présente une porosité avantageuse comprise entre 45 % et 90 %, une taille des pores comprise entre 70µm et 900µm et une distribution des pores comprise entre 300 µm et 850µm avec une interconnectivité totale. Dans un autre mode de réalisation préférentiel, la structure en treillis souple des faces de fusion présente une porosité comprise entre 65% et 85 %, une taille des pores comprise entre 100µm et 650µm avec une distribution de la porosité comprise entre 450µm et 700µm et une interconnectivité totale. Ses valeurs sont proches des caractéristiques de la microarchitecture de l'os au niveau des vertèbres.

La structure en treillis semi-rigide de la paroi externe, présente une porosité avantageuse comprise entre 10% et 70%, une taille des pores comprise entre 300µm et 900µm et une distribution des pores comprise entre 500µm et 2000µm avec une interconnectivité totale. Dans un autre mode de réalisation préférentiel, la structure en treillis semi-rigide de la paroi externe présente une porosité comprise entre 25% et 45%, une taille des pores comprise entre 450µm et 650µm et une distribution des pores comprise entre 800µm et 1800µm avec une interconnectivité totale.

### Autres matériaux selon l'invention

La présente description fournit diverses compositions d'alliage de titane qui ne sont pas nocives pour le corps humain, ont un module d'élasticité aussi faible que les os du corps humain, et dans le même temps présentent une forte résistance à la fatigue.

L'invention prévoit de maintenir le titane en phase bêta car dans cette phase, le titane présente un faible module d'élasticité, grâce à l'utilisation d'éléments d'alliage titane sur la base qu'ils peuvent servir de stabilisant bêta de l'alliage titane afin d'abaisser le module d'élasticité.

Les éléments d'alliage selon l'invention sont des éléments d'alliage de titane pur (Ti) : zirconium (Zr) et le niobium (Nb). Ce choix est dicté par la non toxicité desdits éléments et qui ne présentent aucun risque pour le corps humain.

Pour d'autres applications, telles que l'aéronautique, l'automobile ou le spatial, l'on pourra utiliser d'autres éléments additifs (voir tableau) connus pour former avec le titane des alliages de titane en phase beta, et qui sont classés en trois familles : les β alliages binaires (TZ), les β alliages ternaires(TNZ), les β alliages quaternaires (TNZT) détaillés dans le tableau -1-

**Tableau -1- les trois familles des β alliages Titane**

| Les β alliages binaires | les β alliages ternaires | les β alliages quaternaires |
|---|---|---|
| alliage Ti-Zr | alliage Ti-Nb-Zr | Alliage Ti-Ta-Zr-Sn |
| alliage Ti-Mo | alliage Ti-Nb-Mo | Alliage Ti-Ta-Zr-Mo |
| alliage Ti-Ta | alliage Ti-Nb-Pd | alliage Ti-Nb-Zr-Sn |
| alliage Ti-Mn | alliage Ti-Nb-Sn | alliage Ti-Nb-Zr-Fe |
| Alliage Ti-Nb | alliage Ti-Nb-Ta | alliage Ti-Nb-Ta-Zr |
| alliage Ti-Cr | alliage Ti-Nb-Fe | alliage Ti-Mo-Zr-Fe |
| | alliage Ti-Mo-Zr | alliage Ti-Fe-Ta-Zr |
| | alliage Ti-Mo-Nb | alliage Ti-Cr-Mn-Sn |
| | alliage Ti-AI-Cr | |
| | alliage Ti-Cr-Nb | |
| | alliage Ti-Sn-Cr | |
| | alliage Ti-AI-Mn | |
| | alliage Ti-Ta-Nb | |
| | alliage Ti-Ta-Sn | |
| | alliage Ti-Zr-Ta | |
| | alliage Ti-Mn-Fe | |
| | alliage Ti-Sn-Cr | |

Les proportions du titane, et de ses éléments additifs afin d'atteindre des composition d'alliage de titane ayant un très faible module d'élasticité (inférieur à 20GPa) peuvent être déterminées par un procédé de calcul prédictif basé sur la simulation des interactions chimiques, thermodynamiques lors de la fusion et la méthode des orbitales moléculaires pour concevoir et développer un alliage stable et approprié à un usage médical.

Un tel procédé comprend le calcul des liaisons covalentes, le niveau d'énergie des électrons en fonction du contenu de chaque élément d'alliage, les réactions thermodynamiques, les changements de phase, les phénomènes d'oxydation lors de la fusion, en utilisant l'état électronique qui est le noyau de la variation à l'échelle atomique.

La plupart des propriétés d'un matériau sont déterminées par son état électrique sauf pour une réaction nucléaire. En se basant sur l'état électrique de la matière, on peut déterminer ses micropropriétés à l'échelle atomique, on peut estimer les macro-propriétés de la matière en effectuant une analyse statique de la mécanique de la matière. Pour la réalisation de familles d'alliages comme indiqué dans le tableau -1-. Les micropropriétés du matériau peuvent être analysées par leur état électrique en interprétant l'équation de Schrödinger ou de Heitler et London et analogues.

### Exemple de méthode de préparation de nano poudres Nb/Zr

Dans la présente invention, la préparation de l'alliage Ti-Zr-Nb se caractérise en ce que la granulométrie de la matrice métallique Ti soit à une échelle micrométrique comprise entre 5 µm et 50 µm et la granulométrie des éléments additionnels soit à une échelle nanométrique comprise entre 5 nm et 250 nm.

Les nanoparticules Niobium (Nb) peuvent être obtenues par un procédé de réduction qui utilise la sodiothermie du Nb₂O₅ comme matière première, de sodium comme agent réducteur et du CaCl₂, KCI, NaCI, LiCI comme diluants. Ce procédé consiste à faire réagir 20% de sodium en excès de NaCI, CaCl₂ avec du Nb₂O₅ en sels fondus à 650 ° C pendant 6 h. Les nanoparticules de niobium de haute pureté peuvent être ainsi obtenues.

Les nanoparticules métalliques de zirconium (Zr) ultra pures peuvent être obtenues par ablation laser d'une tige de zirconium dans de l'alcool isopropylic. Ce procédé permet d'obtenir une solution colloïdale de nanoparticules de zirconium. En outre, la distribution des tailles de nanoparticules peut être considérablement réduite en utilisant des impulsions laser femto seconde pour l'ablation .Un plasma induit à décharge cathodique électrolyse sous argon dans du sel fondu est utilisé pour la fabrication de nanoparticules métalliques de zirconium de diamètre médian 50 nm.

Conformément à un exemple de réalisation du modèle prédictif, l'alliage de titane avec un faible module élastique comprend de 15% en poids à 25% en poids de niobium (Nb), de 10% en poids à 15% en poids de zirconium (Zr), le reste du titane (Ti) et des 'impuretés inévitables.

Ainsi, selon l'invention, l'alliage de titane Ti-Zr-Nb en sortie du modèle prédictif aura un module d'élasticité de 14 GPa ou moins.

Le Niobium (Nb) est un élément d'alliage majeur dans le bêta (β) alliage de titane conformément à la présente réalisation, c'est un métal gris, ductile et souple. Le niobium est connu comme un métal biocompatible, car il est stable et ne présente aucune cytotoxicité pour les cellules du corps humain. En outre, le niobium est très stable à température ambiante, et présente une résistance très élevée à la corrosion de telle sorte qu'il ne soit pas corrodé par l'oxygène et des acides forts. Il est préférable que le niobium soit contenu dans l'alliage de titane en une proportion en poids allant de 15% à 20% en poids.

L'expérimentation et la modélisation ont montré que la phase bêta est difficile de se former suffisamment en dehors de cette plage de proportions et le module d'élasticité augmente considérablement au-delà de 40% en poids jusqu'à 70 GPa ou plus. Il est donc préférable que le niobium soit contenu dans l'alliage de titane en une proportion en poids allant de 15% à 20% en poids pour certaines applications spécifiques où le module d'Young doit être particulièrement bas.

Les performances mécaniques attendues peuvent être avantageusement atteintes en changeant la quantité de Nb dans une plage comprise entre 5% à 37,1% en poids.

Le zirconium (Zr) a une résistance à la corrosion très élevée dans l'eau chaude et sous atmosphère acide ou basique. Le zirconium forme un film d'oxyde même dans l'air, présentant une résistance élevée à la corrosion. Le zirconium est un métal biocompatible sans effet cytotoxique. Il est préférable que le zirconium soit contenu dans l'alliage de titane dans une plage allant de 5 % à 20 % en poids.

En effet, le module d'élasticité de l'alliage ternaire (TNZ) du titane, du niobium et du zirconium augmente considérablement en dehors de cette gamme, de sorte qu'il ne peut pas être appliqué à un corps vivant. Il est préférable que le zirconium contenu dans l'alliage de titane soit dans une plage comprise entre 5% et 15% en poids.

Le zirconium, étant un élément neutre, est capable de stabiliser à la fois les phases α et β de l'alliage du titane et agit en étant en solution dans l'alliage en tant que β-stabilisant en ralentissant le processus de transformation de l'alliage. Le plus grand rayon ionique du zirconium (35% plus grand que celui du titane) contribue à perturber les forces de liaison ioniques dans l'alliage, ce qui entraîne une certaine réduction du module d'élasticité.

Selon un mode de réalisation avantageux, il est possible d'abaisser le module d'élasticité de l'alliage de titane à moins de 20 GPa et préférentiellement à moins 15 GPa.

### Effets d'autres additifs

Un ou plusieurs éléments choisis parmi le tantale (Ta), le hafnium (Hf), le molybdène (Mo), et de l'étain (Sn) peuvent en outre être ajoutés à un alliage de titane dans une plage de moins de 3 % en poids. Il est préférable qu'ils soient ajoutés dans une plage de 1 % à 3 % en poids.

Dans ce cas, il est préférable que la teneur en niobium soit de 37 % à 39% en poids, et la teneur en zirconium soit de 5 % à 7% en poids.

Le Tantale (Ta) est un matériau ductile et possède une résistance mécanique élevée même à haute température. Le tantale forme un film stable à la résistance électrique élevée et présente la particularité d'être non sensible à l'oxydation à l'air. En outre, le tantale est très résistant à l'acide, et a une excellente compatibilité avec le corps humain, d'où l'intérêt de son utilisation pour la cimentation des os. Le tantale (Ta) lorsqu'il est allié à du titane sert de « stabilisant bêta » majeur.

Le hafnium (Hf) présente des caractéristiques très semblables au zirconium, et a une excellente résistance à la corrosion et la biocompatibilité. Il sert de « stabilisant bêta » lorsqu'il est allié au titane.

Le molybdène (Mo) a un point de fusion relativement élevé. Toutefois, il a une excellente conductivité thermique, une résistance élevée à la corrosion, même dans un acide fort et possède des propriétés mécaniques très favorables sur une large plage de températures. Il sert de « stabilisant bêta » lorsqu'il est allié au titane.

L'étain (Sn) est stable dans l'air avec une excellente ductilité, soluble dans les acides et les alcalis et présente une très faible température de fusion d'environ 232°C. Il est stable dans le corps humain et donc largement utilisé dans les domaines de l'instrumentation médicale et analogues. Il peut également servir en tant que stabilisant bêta lorsqu'il est allié au titane.

L'ajout des éléments de type Tantale (Ta), hafnium (Hf), molybdène (Mo), étain (Sn) dans une quantité supérieure à 3 % en poids peut affecter le système ternaire titane-niobium-zirconium (TNZ) avec une augmentation du module d'élasticité. En conséquence, pour certaines applications spécifiques où le module d'Young doit être particulièrement bas, la teneur maximale de ses éléments dans l'alliage de titane est fixée à moins 3 % en poids.

### Préparation de mélanges Titane, Zirconium. Niobium

Les mélanges, selon l'invention, peuvent encore comporter une ou plusieurs des caractéristiques optionnelles suivantes :
De préférence, la teneur en titane Ti est supérieure à 40%, de préférence supérieure à 60 %, de préférence, inférieure à 99,50%, de préférence inférieure à 95,5 %.

Une poudre de titane pur Ti selon l'invention, peut encore comporter une ou plusieurs des caractéristiques optionnelles suivantes :
Une granulométrie inférieure à 70 µm, de préférence inférieure à 45 µm ; de préférence inférieure à 30 µm, de préférence inférieure à 10 µm, de préférence supérieure à 5 µm.

Dans un premier mode de réalisation particulier, la poudre de Zirconium(Zr) présente une granulométrie inférieure à 250 nm, de préférence inférieure à 130 nm, et/ou une taille médiane comprise entre 65 nm et 85 nm, une taille minimale supérieure à 30 nm ;
- dans un deuxième mode de réalisation particulier, la poudre de Zirconium(Zr) présente une granulométrie inférieure à 75 nm, de préférence inférieure à 70 nm, et/ou une taille médiane comprise entre 35 nm et 50 nm, et/ou une taille minimale supérieure à 15 nm, de préférence supérieure à 20 nm ;
- dans un troisième mode de réalisation particulier, la poudre de Zirconium(Zr) présente une granulométrie inférieure à 40 nm, de préférence inférieure à 35 nm, et/ou une taille médiane comprise entre 10 nm et 25 nm, et/ou une taille minimale supérieure à 3 nm, de préférence supérieure à 5 nm.
- dans un quatrième mode de réalisation particulier, la poudre de Zirconium(Zr) présente une granulométrie inférieure à 15 nm, de préférence inférieure à 10 nm, et/ou une taille médiane inférieure à 5 nm.

De préférence, la teneur en Niobium (Nb) est supérieure à 3%, de préférence supérieure à 13,5%, de préférence inférieure à 30,0%, de préférence inférieure à 60 % ;
- de préférence, la teneur en dioxyde de titane TiO₂ issu de la réaction du titane avec l'oxygène est inférieure à 0,1 %, de préférence inférieure à 0,3%, de préférence encore inférieure à 0,2%, et/ou de préférence supérieure à 0,01%, de préférence supérieure à 0,1% ;
- de préférence, la teneur en TiO₂+TiZrO₄ est comprise entre 0,1% et 0,5% et la teneur en TiO₂ est comprise entre 0,1% et 0,2%,
- de préférence, la teneur en « autres oxydes » est inférieure à 0,5%, de préférence inférieure à 0.25 %, de préférence inférieure à 0,10%, de préférence inférieure à 0,05%, de préférence inférieure à 0,03%, de préférence inférieure à 0,02%, voire inférieure à 0,01% où les propriétés d'oxydation en sont avantageusement améliorées ;
- de préférence, les « autres oxydes » sont des impuretés ;
- de préférence, la teneur en NbO+ZrO₂ est inférieure à 2,0 %, inférieure à 1 ,8 %, inférieure à 1,6 %, voire inférieure à 1,4 % ;
Dans un autre mode de réalisation, la teneur en NbO+TiO₂ est supérieure à 0,1 %, supérieure à 0,2 %, supérieure à 0,3 %, supérieure à 0,4 %, voire supérieure à 0,5 %, supérieure à 0,6 %, ou supérieure à 0,7 %.

Le mixage des poudres de titane pur Ti avec des poudres nanométriques de (Zr) et de (Nb) est réalisé selon un mode de mélange particulièrement avantageux, sous gaz inerte de type argon ou sous vide jusqu'à obtention d'un mélange homogène avec formation de pellicules dragéifiant les particules de titane avec les nano poudres Zr et Nb sans aucune ségrégation ni agglomération des nano poudres et présentant une coulabilité et compaction appropriés aux techniques de fusion sur lit de poudre.

L'alliage Ti-Zr en phase β contenant les deux composants titane et Zircone, caractérisé en ce que ledit alliage est un alliage composite à matrice métallique (CMM) avec une proportion de 65 à 95 % en poids en Ti, 5 à 35 % en poids Zr, dans sa forme binaire TZ.

L'alliage Ti-Zr en phase β contenant les deux composants titane et Zircone, caractérisé en ce que cet alliage est un alliage composite à matrice métallique (CMM) avec une proportion de 25 à 60 % en poids en Ti, 5 à 35 % en poids Zr, 5 à 30% en poids de Nb, dans sa forme ternaire TZN.

L'alliage Ti-Zr en phase β contenant les deux composants titane et Zircone, caractérisé en ce que cet alliage est un alliage composite à matrice métallique (CMM) avec une proportion de 25 à 60 % en poids en Ti, 5 à 35 % en poids Zr, 5 à 30% en poids de Nb et 1 à 3 % en poids en Ta, dans sa forme quaternaire TZNT.

L'alliage Ti-Zr en phase β, caractérisé en ce que la granulométrie de la matrice métallique Ti soit comprise entre 5 µm et 50 µm et la granulométrie des éléments additionnels soit comprise entre 5 nm et 250 nm.

L'alliage Ti-Zr en phase β, dans lequel est incorporé à au moins un premier élément additif choisi dans le groupe (Nb, Ta, Mo, Sn, Hf, Ga, Ag, Fe, Pd, Pt, Al, Si, Mn, Au, Co, Au, W, Ru, Rh, Cd, In)

### Mise en forme de l'alliage

L"alliage Ti-Zr est mis en forme par empilement de couches de poudres métalliques, fusionnées sélectivement par concentration d'une source d'énergie modulable de type laser (SLM) ou faisceau d'électrons (EBM) ou frittage de poudres (SLS) sur un lit de poudre ou par projection de poudres métalliques sur un faisceau laser (PFLAM) ou projection de liants (3D printing) ou fusion par induction (ISM) ou fusion par induction sous vide (VIM) ou refusion par arc sous vide (VAR) ou fusion par arc de plasma de fusion (ARC) par compression isostatique à chaud(HIP) ou moulage injection métal (MIM). Le mode de fusion préféré est par SLM.

Selon l'invention et dans un mode de réalisation préférentiel mais non limitatif, un alliage beta titane de formulation Ti19Nb14Zr est préparé sous forme de poudre métallique et fusionné par un procédé de mise en forme de l'alliage TZN par SLM sous atmosphère sans oxygène, de préférence sous argon à une pression comprise entre 10 et 30 mbar.

### Caractéristiques de différents alliages selon l'invention

L'alliage Ti19Nb14Zr, réalisé selon l'invention, présente un module d'élasticité compris entre 10GPa et 30 GPa dans sa forme de bloc solide. Dans un autre mode de réalisation préférentiel le module d'élasticité est égal à 14 GPa comme indiqué dans la ligne 1 du Tableau-2-

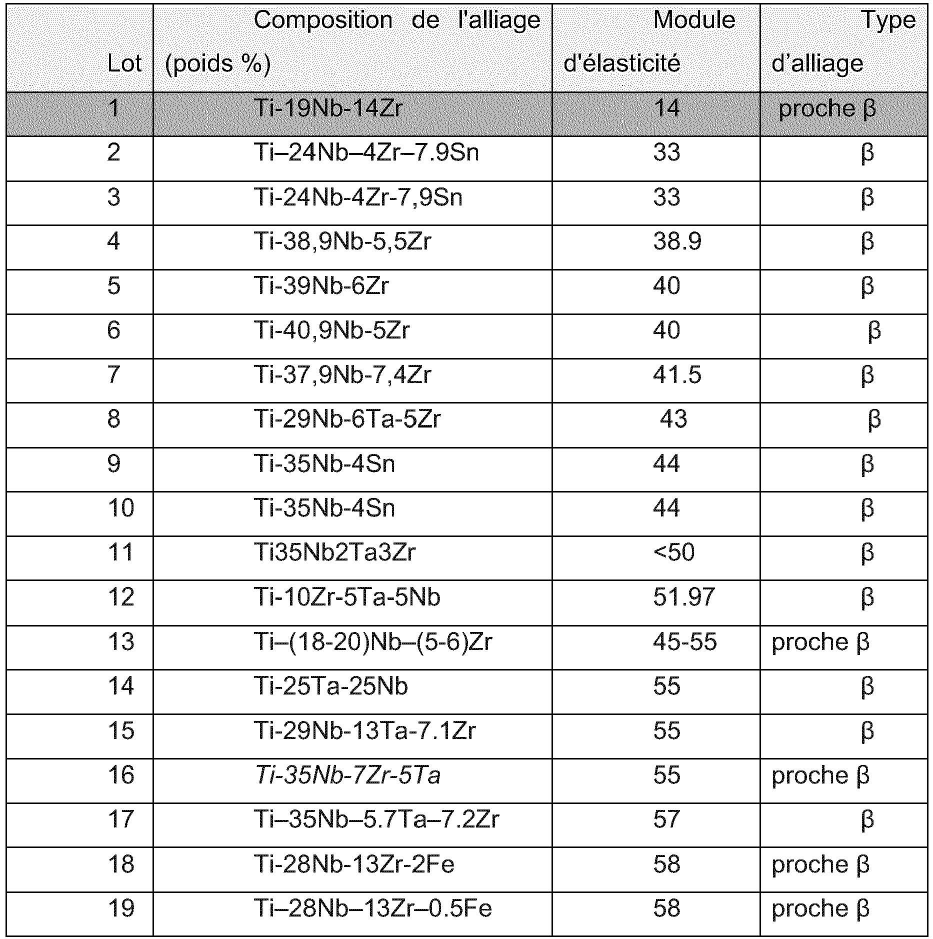

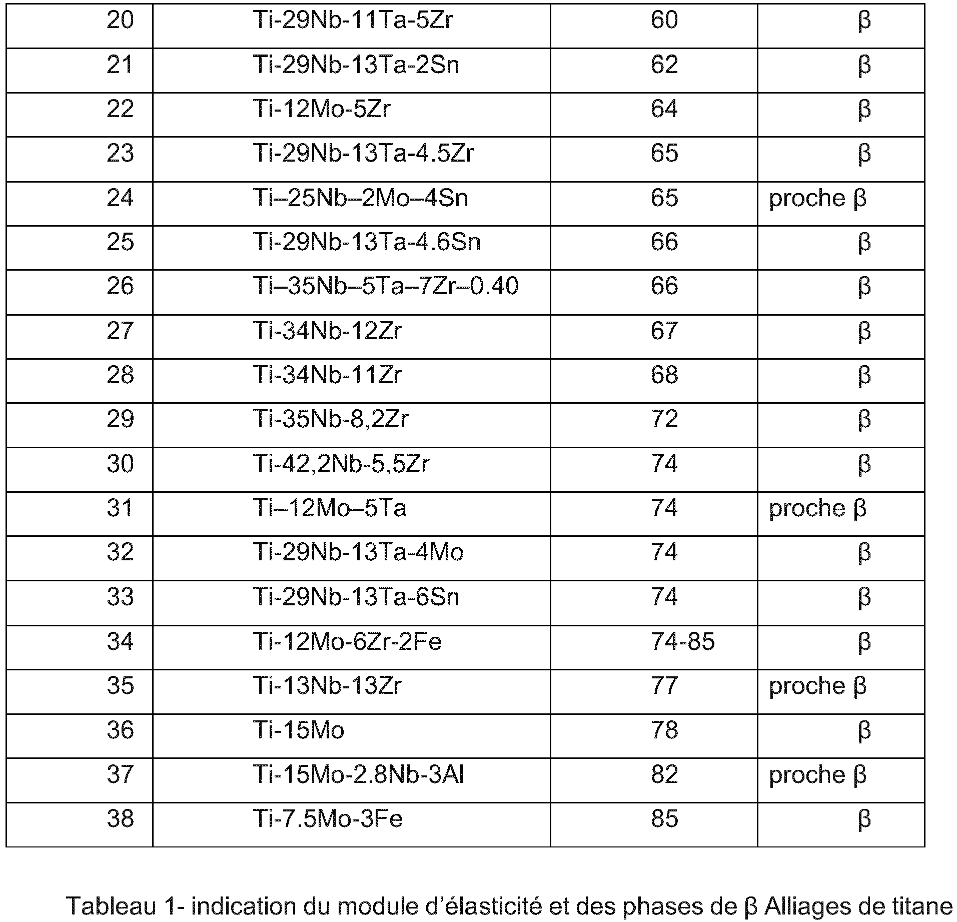

### Fabrication d'un structure poreuse

Le procédé de mise en forme de l'alliage Ti-Zr selon l'invention peut avantageusement faire en sorte que le β alliage de titane présente une porosité comprise entre 60% et 70%, une taille des pores comprise entre 250µm et 700µm et une distribution des pores comprise entre 800µm et 1800µm avec une interconnectivité totale.

Procédé de mise en forme de l'alliage Ti-Zr, caractérisé en ce que le matériau poreux fusionné présente un module d'élasticité compris entre 0.3 GPa et 1.4 GPa et une résistance à la compression supérieure à 100 MPa.

Le matériau poreux présente des limites d'élasticité et de compression similaires à celles de l'os. En travaillant sur la géométrie des structures poreuses, leurs tailles, leurs distributions, nous pouvons avoir différents modules d'élasticité par zone ce qui correspond aux caractéristiques d'un os humain (modules d'élasticité différents que ce soit en cortical ou en spongieux).

L'alliage Ti19Nb14Zr fusionné avec une porosité contrôlée présente un module d'élasticité compris entre 0.3 GPa et 1.4 GPa dans sa forme de poreuse.

Selon l'invention, l'ajout de l'azote (N) sous sa forme gazeuse pendant la fusion et/ou pendant les traitements thermiques dans des proportions comprise entre 5 et 10% sous une pression avantageusement sélectionnée et dans une place de température comprise entre 850° et 1850°C améliore la contrainte de traction de 200 MPa à plus de 600 MPa en maintenant la même élasticité.

### Avantages de l'aiout d'azote N

La présente invention décrit une composition d'un beta-alliage de titane qui n'est pas nocifs pour le corps humain avec un module d'élasticité qui se rapproche de celui des os du corps humain et dans le même temps présente une forte résistance à la fatigue par ajout d'azote (N).

En effet, l'alliage à base de titane bêta conformément aux modes de réalisation de la présente invention possède un faible module d'élastique et d'excellentes propriétés mécaniques. Par conséquent, il peut être utilisé dans une variété d'applications, par exemple, en tant que matériau pour dispositifs médicaux, tels que les os artificiels, des dents artificielles et des articulations de la hanche artificielle, des stents, agrafes, du fils orthodontiques et l'instrumentation de chirurgie.

L'alliage Ti-Zr se caractérise en ce que le matériau fusionné présente un module d'élasticité égal à 14 GPa.

L'alliage Ti-Zr se caractérise en ce que le matériau poreux fusionné présente un module d'élasticité compris entre 0.3 GPa et 1.4 GPa et une résistance à la compression supérieure à 100 MPa.

### Réalisation par fabrication additive

L'invention concerne aussi un mode de réalisation par fabrication additive de l'alliage Ti19Nb14Zr selon l'invention, dans un mode de réalisation par fusion laser sur lit de poudre comportant les étapes successives suivantes :
A) préparation d'un fichier numérique d'une forme géométrique à réaliser, le dit fichier numérique est tranché virtuellement de (1) à (n) selon des épaisseurs appropriées par rapport à l'axe de construction Z.
B) préparation d'un mélange homogène de poudre dans les proportions massiques Nb : 19% Zr : 14%, Ti : le reste, la poudre de titane étant micrométrique, la poudre de Nb et Zr nanométrique, mise sous argon d'une chambre de fusion laser
C) mise en chauffe d'un substrat ou plaque en titane température minimale 200°C / température maximale 1500°C
D) dépôt d'une première couche du mélange Ti19Nb14Zr sur un substrat ou une plaque en titane selon l'étape C), l'épaisseur du lit de poudre est inférieure à 50µm et supérieure à 5µm
E) Une source d'énergie focalisée vient fusionner sélectivement une partie du lit de poudre selon le tranchage décrit en étape A) autour de 1600°C
F) Les étapes E) et F) sont exécutées « n » fois où (n) représente le nombre de couches de la forme à réaliser.

Exemple de paramètres de réalisation d'un implant sur une machine SLM 125 HL du fabricant SLM SOLUTIONS GMBH.

| Type de paramètre | Alliage ternaire TZN | Alliage quaternaire TZNS |
|---|---|---|
| Type de poudre | Ti19Nb14Zr | Ti-24Nb-4Zr-7.9Sn |
| Puissance du laser en zone pleine (w) | 400 | 300 |
| Puissance basse du laser (w) | 200 | 200 |
| Puissance du laser en zone poreuse (w) | 150 | 100 |
| Exposition (ms) | 350 | 380 |
| Limite d'exposition (ms) | 300 | 350 |
| Distance de hachurage (µm) | 25 | 10 |

La mise en forme de l'alliage Ti19Nb14Zr est réalisée par fabrication additive selon la technologie de fusion sur lit de poudre. Un implant biomédical est réalisé par un logiciel de conception en trois dimensions selon les données numériques collectées via une IRM ou un scanner 3D

La partie poreuse en totalité ou en partiel est prédéfinie sur le modèle 3D à partir d'une cellule de base, ladite cellule de base ou cellule unitaire est de forme géométrique en trois dimensions (x,y,z), formée par au moins trois arêtes, avec un habillage de forme arrondi, cette forme n'est pas limitative, avec une ouverture d'angle d'au moins 10°, et la cellule unitaire peut être de forme régulière ou irrégulier en forme de pyramide, tétraèdre, cubique, octaèdre, icosaèdre, dodécaèdre et sans limitation de forme.

Plusieurs formes de porosité peuvent être sélectionnées avec la possibilité de paramétrer les zones de répartition de pores de différentes tailles.

### Obtention d'un mélange homogène de poudres

Un mélange homogène de poudres, c'est à dire dans lequel une majorité des microparticules de métal sont chacune entourée de nanoparticules de céramique, sans agrégats de ces particules de céramiques, est obtenu en mélangeant ces poudres dans les proportions indiquées au sein d'un mélangeur ou blendeur, et en les y soumettant à une agitation tridimensionnelle durant 45 min à 10 heures avec une fréquence d'agitation aléatoire en continu ou interrompue jusqu'à l'obtention d'un mélange homogène stable dans le sens où l'agencement de nanoparticules de céramiques entourant les particules microscopiques de métal perdure, en l'absence d'oxygène. Par exemple, le mélangeur préféré pour cette opération est un appareil dénommé Turbulat^{®}.

### Avantage de l'utilisation d'azote

Selon l'invention, la pièce issue de la chambre de fusion subit un traitement thermique sous azote selon lequel elle est introduite dans un four thermique métallique susceptible de monter jusqu'à 3000°C où de l'azote (N) est ajouté sous sa forme gazeuse dans des proportions comprise entre 5 et 10% sous une pression avantageusement comprise entre 10 et 12 bar et dans une plage de température comprise entre 850° et 1850°C, afin d'améliorer la contrainte de traction de 200 MPa à plus de 600 MPa en maintenant la même élasticité. Ce traitement thermique a pour but de donner une dureté supplémentaire en maintenant la même élasticité et en diminuant les tensions résiduelles entre les couches réalisées successivement de la pièce. Idéalement, le traitement thermique sous azote est réalisé à 1100°C durant 45 minutes.

## Revendications

1. Procédé de mise en forme d'un alliage comprenant principalement du Ti en phase β ou proche b, comprenant les étapes de :
- préparation d'un mélange homogène de poudre de particules comprenant des particules micrométriques de Ti pur et des particules nanométriques d'au moins un élément additionnel ou composé favorisant la phase béta du Ti lors de son refroidissement à partir de sa température de transition de phase a/b
- exposition dudit mélange de poudre de particules à une source d'énergie focalisée qui vient chauffer sélectivement au moins une partie d'un lit dudit mélange homogène de poudre à une température comprise entre 850 et 1850°C
- refroidissement de la partie ayant subi cette exposition avec conservation de la phase b du Ti,
- dans lequel le mélange homogène de poudre de particules comprend des particules nanométriques de deux composés favorisant la phase béta du Ti , en vue de former un alliage ternaire de Ti beta,
- dans lequel les deux composés favorisant la phase béta du Ti sont Zr et Nb, formant avec le Ti un alliage ternaire TNZ,
- dans lequel les deux composés sont Zr dans une teneur de 14 % en poids de l'alliage et Nb dans une teneur de 19 % en poids, le reste étant du Ti, l'alliage formé étant Ti-19Nb-14Zr.

2. Procédé selon la revendication précédente, dans lequel l'étape d'exposition dudit mélange à une source d'énergie focalisée est effectuée dans une enceinte fermée sous argon gazeux.

3. Procédé selon l'une des revendications précédentes, dans lequel la source d'énergie comprend une source d'énergie modulable de type laser (SLM) ou faisceau d'électrons (EBM) ou est dégagée lors d'une opération de frittage de poudres (SLS) ou par projection de poudres sur un faisceau laser (PFLAM) ou projection de liants (3D printing) ou fusion par induction (ISM) ou fusion par induction sous vide (VIM) ou refusion par arc sous vide (VAR) ou fusion par arc de plasma de fusion (ARC) ou par compression isostatique à chaud (HIP) ou moulage injection métal (MIM).

4. Procédé de fabrication d'un objet d'une forme géométrique donnée, constitué d'un alliage fabriqué selon le procédé de l'une des revendications précédentes, comprenant les étapes de :
i. en fonction de la forme géométrique à réaliser, préparation de tranches virtuelles de l'objet à réaliser d'épaisseur donnée suivant un axe de construction de l'objet,
ii. préparation d'un mélange homogène de poudre de Ti et de d'un élément additif favorisant la phase beta du Ti lors de son refroidissement à partir de sa température de transition de phase a/b, la granulométrie de la poudre de titane étant micrométrique et la granulométrie de l'élément additif étant nanométrique,
iii. dépôt sur un substrat d'une couche du mélange de poudre d'une épaisseur correspondant à celle de la tranche de la forme géométrique à réaliser
iv. exposition dudit mélange de poudre de ladite première couche à une source d'énergie focalisée qui vient chauffer sélectivement une partie du lit dudit mélange de poudre aux emplacements correspondant à la tranche virtuelle à réaliser, par laquelle est obtenue une première tranche de la forme géométrique à réaliser dans l'alliage de Ti en phase beta, au sein de la première couche de mélange de poudre
v. dépôt d'une n-ième couche de mélange de poudre sur la couche précédente incluant la tranche de l'objet réalisée à l'étape précédente, et exposition de la n-ième couche à la source d'énergie focalisée pour obtenir une n-ième tranche de la forme géométrique à réaliser
vi. répétition de l'étape précédente jusqu'à l'obtention de la forme géométrique à réaliser.

5. Procédé selon la revendication précédente, dans lequel la forme géométrique à réaliser est constituée au moins en partie d'un réseau de cellules unitaires interconnectées définissant une structure poreuse.

6. Matériau composite obtenu suite à la chauffe à une température supérieure à la température de transition a/b du titane, et au refroidissement d'un mélange homogène de microparticules de titane et de nanoparticules d'un élément additif favorisant la phase beta du titane lors de son refroidissement à partir d'une température de transition a/b et choisie parmi Zr et Nb, de façon à former un alliage ternaire de titane béta, présentant un module d'élasticité compris entre 10 et 30 GPa, comprenant deux éléments additifs constitués de Zr et Nb, dans des proportions massiques Ti : 19% et Zr : 14%, le reste étant Ti, comprenant des formations cristallines de titane renforcée de Zr entourées de plages de Nb ductiles.

7. Objet biocompatible, tel qu'un implant dentaire, chirurgical et instruments associés ou une prothèse ou une cage intersomatique ou un stent comprenant une portion réalisée avec le matériau selon la revendication 6.

## Patentansprüche

1. Verfahren zum Formen einer Legierung, umfassend hauptsächlich Ti in β-Phase oder nahe b, umfassend die Schritte:
- Herstellen einer homogenen Mischung aus Partikelpulver, umfassend mikrometrische Partikel von reinem Ti und nanometrische Partikel von mindestens einem zusätzlichen Element oder einer Verbindung, die die Beta-Phase von Ti während seines Abkühlens von seiner a/b-Phasenübergangstemperatur fördert
- Aussetzen der Partikelpulvermischung gegenüber einer Quelle von fokussierter Energie, die wahlweise mindestens einen Teil eines Betts der homogenen Pulvermischung auf eine Temperatur zwischen 850 und 1850 °C erhitzt
- Abkühlen des Teils, der diesem Aussetzen unterzogen wird, unter Beibehaltung der b-Phase von Ti,
- wobei die homogene Mischung aus Partikelpulver nanometrische Partikel von zwei Verbindungen umfasst, die die Beta-Phase von Ti fördern, um eine ternäre Legierung von Ti-Beta auszubilden,
- wobei die zwei Verbindungen, die die Beta-Phase von Ti fördern, Zr und Nb sind, die mit Ti eine ternäre Legierung TNZ ausbilden,
- wobei die zwei Verbindungen Zr in einem Gehalt von 14 Gew.-% der Legierung und Nb in einem Gehalt von 19 Gew.-% sind, wobei der Rest Ti ist, wobei die ausgebildete Legierung Ti-19Nb-14Zr ist.

2. Verfahren nach dem vorstehenden Anspruch, wobei der Schritt des Aussetzens der Mischung gegenüber einer Quelle von fokussierter Energie in einem geschlossenen Gehäuse unter gasförmigem Argon durchgeführt wird.

3. Verfahren nach einem der vorstehenden Ansprüche, wobei die Energiequelle eine variierbare Energiequelle einer Laser- (SLM) oder Elektronenstrahlart (EBM) umfasst oder während eines Pulversinterprozesses (SLS) oder durch Pulversprühen auf einen Laserstrahl (PFLAM) oder Binderjetting (3D-Druck) oder Induktionsschmelzen (ISM) oder Vakuuminduktionsschmelzen (VIM) oder Vakuumlichtbogenumschmelzen (VAR) oder Plasmalichtbogenschmelzen (ARC) oder durch isostatisches Heißpressen (HIP) oder Metallspritzgießen (MIM) freigesetzt wird.

4. Verfahren zum Anfertigen eines Gegenstands einer gegebenen geometrischen Form, der aus einer Legierung besteht, die gemäß dem Verfahren nach einem der vorstehenden Ansprüche angefertigt wird, umfassend die Schritte:
i. in Abhängigkeit von der zu erstellenden geometrischen Form, Herstellen virtueller Abschnitte des zu erstellenden Gegenstands mit gegebener Dicke entlang einer Konstruktionsachse des Gegenstands,
ii. Herstellen einer homogenen Mischung aus Ti-Pulver und einem Zusatzelement, das die Beta-Phase von Ti während seines Abkühlens von seiner a/b-Phasenübergangstemperatur fördert, wobei die Korngrößenverteilung des Titanpulvers mikrometrisch und die Korngrößenverteilung des Zusatzelements nanometrisch ist,
iii. Ablagern auf ein Substrat einer Schicht der Pulvermischung mit einer Dicke, die derjenigen des Abschnitts der zu erstellenden geometrischen Form entspricht
iv. Aussetzen der Pulvermischung der ersten Schicht gegenüber einer Quelle von fokussierter Energie, die wahlweise einen Teil des Betts der Pulvermischung an den Stellen schmilzt, die dem zu erstellenden virtuellen Abschnitt entsprechen, wobei dadurch ein erster Abschnitt der in der Legierung aus Ti in der Beta-Phase zu erstellenden geometrischen Form innerhalb der ersten Schicht der Pulvermischung erhalten wird
v. Ablagern einer n-ten Schicht aus Pulvermischung auf der vorstehenden Schicht, einschließlich des Abschnitts des in dem vorstehenden Schritt erstellten Gegenstands, und Aussetzen der n-ten Schicht gegenüber der Quelle von fokussierter Energie zum Erhalten eines n-ten Abschnitts der zu erstellenden geometrischen Form
vi. Wiederholen des vorstehenden Schritts, bis die zu erstellende geometrische Form erhalten ist.

5. Verfahren nach dem vorstehenden Anspruch, wobei die zu erstellende geometrische Form mindestens teilweise aus einem Netzwerk von miteinander verbundenen Einheitszellen besteht, die eine poröse Struktur definieren.

6. Verbundwerkstoff, der nach dem Erhitzen auf eine Temperatur über der a/b-Übergangstemperatur von Titan und dem Abkühlen einer homogenen Mischung aus Titanmikropartikeln und Nanopartikeln eines Zusatzelements erhalten wird, das die Beta-Phase von Titan während seines Abkühlens von einer a/b-Übergangstemperatur fördert und aus Zr und Nb ausgewählt ist, um eine ternäre Legierung aus Beta-Titan auszubilden, die einen Elastizitätsmodul zwischen 10 und 30 GPa aufweist, umfassend zwei Zusatzelemente, die aus Zr und Nb bestehen, in Massenanteilen von Ti: 19 % und Zr: 14 %, wobei der Rest Ti ist, umfassend Zr-verstärkte Titankristallformationen, die von duktilen Nb-Bereichen umgeben sind.

7. Biokompatibler Gegenstand, wie zum Beispiel ein Zahnimplantat, ein chirurgisches Implantat und zugehörige Instrumente oder eine Prothese oder ein Zwischenwirbelkäfig oder ein Stent, umfassend einen Anteil, der mit dem Werkstoff nach Anspruch 6 erstellt ist.

## Claims

1. Method for shaping an alloy comprising mainly β phase or near b phase Ti, comprising the steps of:
- preparing a homogeneous particle powder mixture comprising micrometric particles of pure Ti and nanometric particles of at least one additional element or compound which promotes the beta phase of Ti during the cooling thereof from its a/b phase transition temperature
- exposing said particle powder mixture to a focused energy source which selectively heats at least a part of a bed of said homogeneous powder mixture to a temperature of between 850 and 1850°C
- cooling the part which has undergone said exposure, thus maintaining the b phase of Ti,
- wherein the homogeneous particle powder mixture comprises nanometric particles of two compounds which promote the beta phase of Ti in order to form a ternary alloy of beta Ti,
- wherein the two compounds which promote the beta phase of Ti are Zr and Nb, which form together with Ti a ternary TNZ alloy,
- wherein the two compounds are Zr with a content of 14 wt.% of the alloy and Nb with a content of 19 wt.%, the remainder being Ti, the alloy formed being Ti-19Nb-14Zr.

2. Method according to the preceding claim, wherein the step of exposing said mixture to a focused energy source is performed inside a closed chamber in the presence of gaseous argon.

3. Method according to either of the preceding claims, wherein the energy source comprises a variable energy source of the laser type (SLM) or electron beam type (EBM) or is released during a powder sintering process (SLS) or by spraying powder on a laser beam (PFLAM) or binder spraying (3D printing) or induction melting (ISM) or vacuum induction melting (VIM) or vacuum arc remelting (VAR) or plasma arc melting (ARC) or by hot isostatic pressing (HIP) or metal injection molding (MIM).

4. Method for producing an object of a given geometric shape, consisting of an alloy produced according to the method of any of the preceding claims, comprising the steps of:
i. depending on the geometric shape to be produced, preparing virtual slices of the object to be produced with a given thickness along a construction axis of the object,
ii. preparing a homogeneous powder mixture of Ti and of an additive element which promotes the beta phase of Ti during the cooling thereof from its a/b phase transition temperature, the particle size of the titanium powder being micrometric and the particle size of the additive element being nanometric,
iii. depositing, on a substrate, a layer of the powder mixture with a thickness corresponding to that of the slice of the geometric shape to be produced
iv. exposing said powder mixture of said first layer to a focused energy source which selectively heats a part of the bed of said powder mixture at the locations corresponding to the virtual slice to be produced, whereby a first slice of the geometric shape to be produced is obtained in the beta phase Ti alloy, within the first layer of powder mixture
v. depositing an nth layer of powder mixture on the previous layer including the slice of the object produced in the previous step, and exposing the nth layer to the focused energy source to obtain an nth slice of the geometric shape to be produced
vi. repeating the previous step until the geometric shape to be produced is obtained.

5. Method according to the preceding claim, wherein the geometric shape to be produced consists at least in part of a network of interconnected unit cells defining a porous structure.

6. Composite material obtained as a result of heating to a temperature higher than the titanium a/b transition temperature, and cooling a homogeneous mixture of microparticles of titanium and nanoparticles of an additive element which promotes the beta phase of titanium during the cooling thereof from an a/b transition temperature and is selected from Zr and Nb so as to form a ternary alloy of beta titanium, having an elastic modulus of between 10 and 30 GPa, and comprising two additive elements consisting of Zr and Nb in mass proportions of Ti: 19% and Zr: 14%, the remainder being Ti, comprising Zr-reinforced titanium crystalline formations surrounded by ductile Nb areas.

7. Biocompatible object, such as a dental implant, a surgical implant and related instruments or a prosthesis or an interbody cage or a stent comprising a portion made from the material according to claim 6.
